# EUROPEAN PATENT APPLICATION

(11) **EP 4 550 542 A2**
(43) Date of publication of application: **07.05.2025**
(21) Application number: 24208550.4
(22) Date of filing: 24.10.2024
(51) Int. Cl.: H01M 50/213, H01M 50/271, H01M 50/503, H01M 50/507

(54) **INTEGRATED BUSBAR ASSEMBLY AND BATTERY MODULE**

(30) Priority: 30.10.2023 CN 202322927561 U; 30.10.2023 CN 202311426472; 07.08.2024 WO PCT/CN2024/110403
(71) Applicant: Eve Energy Co., Ltd., Huizhou, Guangdong 516006 (CN)
(72) Inventor: LAN, Han, Huizhou, Guangdong 516006 (CN)
(74) Representative: Murgitroyd & Company

(57) **Abstract**

The present disclosure provides a battery module and an integrated busbar assembly for fixing multiple single battery cells in conjunction with a cell holder provided with a plurality of bracket slots, and the integrated busbar assembly includes: an integrated bracket including a first surface and a second surface arranged oppositely, wherein the first surface is opened with a profiling groove group arranged opposite to the bracket slots, the second surface is opened with a placement groove group, the profiling groove group is communicated with the placement groove group, and opposite ends of the plurality of the single battery cells are fixed in the profiling groove group and the bracket slots; and a bus module fixed in the placement groove group and electrically connected to the plurality of single battery cells so that the plurality of single battery cells are electrically connected to each other.

## Description

### TECHNICAL FIELD

The present disclosure relates to a technical field of battery technologies, and in particular, to an integrated busbar assembly and a battery module.

### BACKGROUND

In recent years, with the promotion and development of new energies, the power battery industry has developed vigorously. At present, most battery packs use square power battery cells, which are battery packs composed of multiple square power battery cells connected in series. This type of battery pack is widely used due to its advantages such as portability, high energy density, long life, high efficiency, and low self-discharge rate. However, since the battery cells inside are all square, lateral sides of the battery cell are prone to expansion during operation. For this reason, in related arts, the problem of battery expansion is avoided by using cylindrical battery cells to form a battery pack. The fixed installation of the multiple cylindrical battery cells is generally completed using cylindrical profiling plates, end plates, and steel strips. However, a structure involved in this fixed installation mode is relatively complex and the assembly is difficult.

### SUMMARY

Embodiments of the present disclosure provide an integrated busbar assembly and a battery module, which may improve the current fixed installation mode of multiple cylindrical battery cells in a cylindrical battery pack, which involves a relatively complex structure and difficult assembly.

In a first aspect, embodiments of the present disclosure provide an integrated busbar assembly for fixing multiple single battery cells in conjunction with a cell holder provided with a plurality of bracket slots, and the integrated busbar assembly includes:
an integrated bracket including a first surface and a second surface arranged oppositely, wherein the first surface is opened with a profiling groove group arranged opposite to the bracket slots, the second surface is opened with a placement groove group, the profiling groove group is communicated with the placement groove group, and opposite ends of the plurality of the single battery cells are fixed in the profiling groove group and the bracket slots; and
a bus module fixed in the placement groove group and electrically connected to the plurality of single battery cells so that the plurality of single battery cells are electrically connected to each other.

In a second aspect, embodiments of the present disclosure provide a battery module, including:
a box body opened with an accommodation cavity;
a battery cell module disposed in the accommodation cavity;
the integrated busbar assembly in the first aspect disposed on a top of the box body and electrically connected to the battery cell module;
a box cover covering the top of the box body; and
a battery management module disposed on a side of the box cover facing the box body and electrically connected to the integrated busbar assembly through connecting harnesses.

### Beneficial effects of the embodiments of the present disclosure:

In the embodiments of the present disclosure, by using the integrated bracket to cooperate with the cell holder to limit and fix the plurality of single battery cells between the integrated bracket and the cell holder. Compared with the solution that the cylindrical profiling plates and the end plates are used to fix the plurality of single battery cells, the structure is simpler, the volume is smaller, and the fixing and installation is simpler and more convenient. Specifically, the plurality of bracket slots are provided on the cell holder, and the profiling groove group arranged opposite to the bracket slots is opened on the first surface of the integrated bracket, so that both ends of the single battery cell are respectively located in the profiling groove group and the bracket slot to limit and fix the single battery cell. The entire process only requires placing the single battery cells into the bracket slots and then aligning the profiling groove group of the integrated bracket on the single battery cells. The installation process is simple and quick. The profiling groove group on the integrated bracket and the bracket slots on the cell holder are only need to be designed according to diameters of the battery cells. Compared with using cylindrical profiling plates and end plates, the structure is simpler, processing is easier, and the accuracy requirements for profiling are also lower, and there is no need to cover and fix an entire side of the single battery cell, so a volume of the integrated bracket and the cell holder is also smaller. In addition, by disposing the bus module in the placement groove group, when the integrated bracket fixes the single battery cells, the bus module provided on the integrated bracket is electrically connected to the single battery cells simultaneously, and there is no need to connect wires separately, thereby realizing the electrical connection of the plurality of single battery cells.

### BRIEF DESCRIPTION OF THE DRAWINGS

In order to more clearly illustrate technical solutions in the embodiments of the present disclosure, the drawings needed to be used in the description of the embodiments will be briefly introduced below. Obviously, the drawings in the following description are only some embodiments of the present disclosure. For those skilled in the art, other drawings may also be obtained based on these drawings without exerting creative efforts.
FIG. 1 is a schematic structural diagram showing an integrated busbar assembly coupling with a battery cell module provided by embodiments of the present disclosure;
FIG. 2 is a schematic structural view of an integrated busbar assembly provided by embodiments of the present disclosure;
FIG. 3 is a schematic exploded view of the structure in FIG. 2;
FIG. 4 is a schematic structural view (in a first perspective) of an integrated bracket provided by embodiments of the present disclosure;
FIG. 5 is a schematic structural view (in a second perspective) of an integrated bracket provided by embodiments of the present disclosure;
FIG. 6 is a schematic structural view of a battery module provided by embodiments of the present disclosure;
FIG. 7 is a schematic exploded structural view of a battery module provided by embodiments of the present disclosure.

### Explanation of reference symbols:

1, box body; 11, accommodation cavity; 12, positioning post; 13, accommodation part; 14, base; 15, installation part; 151, first installation post; 152, second installation post; 2, battery cell module; 21, cell holder; 211, bracket slot; 22, single battery cell; 3, integrated busbar assembly; 31, integrated bracket; 311, first surface; 312, second surface; 313, profiling groove group; 3131, profiling groove; 314, placement groove group; 3141, first placement groove; 3142, second placement groove; 315, heat dissipation notch; 316, positioning hole; 317, hanger; 318, installation position; 32, bus module; 321, total positive bus; 322, total negative bus; 323, series bus; 4, box cover; 5, battery management module; 51, avoidance position; 6, connecting harness.

### DETAILED DESCRIPTION

The technical solutions in the embodiments of the present disclosure will be clearly and completely described below with reference to the accompanying drawings in the embodiments of the present disclosure. Obviously, the described embodiments are only some of the embodiments of the present disclosure, rather than all of the embodiments. Based on the embodiments in the present disclosure, all other embodiments obtained by those skilled in the art without making creative efforts fall within the protection scope of the present disclosure. In addition, it should be understood that specific embodiments described here are only used to illustrate and explain the application, and are not used to limit the application. In the present disclosure, unless otherwise specified, orientational terms such as "upper" and "lower" usually refer to the upper and lower positions of the device in actual use or working state, specifically the orientations of the drawing in the drawings. The terms "inside" and "outside" refer to the outline of the device.

In related arts, a battery module is composed of multiple square battery cells. By using multiple square battery cells to form the battery module is beneficial to saving costs and increasing an energy density of the battery module. However, there are also some problems with using square battery cells. For example, the square battery cells will expand during operation, and the battery module is composed of multiple battery cells, that is, multiple battery cells will expand. The expansion of the battery cell is not conducive to normal use of the battery cell, and the expansion of multiple battery cells may easily squeeze components near the battery cell, causing damage to the components or battery cells, and even causing other dangers. In this regard, multiple side plates are currently generally used to surround the battery cell, and then steel strips are used for binding, thereby achieving the purpose of suppressing the expansion of the square battery cell. However, this solution will not only increase the complexity during production and assembly of the battery module, but also increase the complexity and volume of a structure of the battery module, and it has not solved the fundamental source of the expansion of the battery cell. That is, it only suppresses the expansion of the battery cell, rather than eliminating the expansion of the battery cell. Therefore, in some technologies, the square battery cells are replaced with cylindrical battery cells to completely eliminate the problem of the expansion of the square battery cell. However, because a structure of the cylindrical battery cell is completely different from that of the square battery cell, cylindrical battery cells cannot be adapted to an installation and fixing structure used by square battery cells, and the installation and fixing structure needs to be redesigned for cylindrical battery cells. In the related arts, cylindrical profiling plates are mainly used to surround the cylindrical battery cells, and then end plates are used to match the profiling plates to initially fix the cylindrical battery cells. Steel strip slots are opened on lateral sides of the cylindrical profiling plate, and steel strips are arranged along the steel strips, and the cylindrical battery cell is bundled with the steel strips to complete the fixed installation. Such installation has a complex structure, is not conducive to heat dissipation of the cylindrical battery cell, and requires high process assembly. For example, regarding an arrangement of the steel strip, it cannot be tilted, specifically, an included angle between the steel strip and the end plate cannot be greater than 1°, otherwise it will affect fixation reliability of the cylindrical battery cell. During a vibration test of the battery cells, the steel strip may fall off.

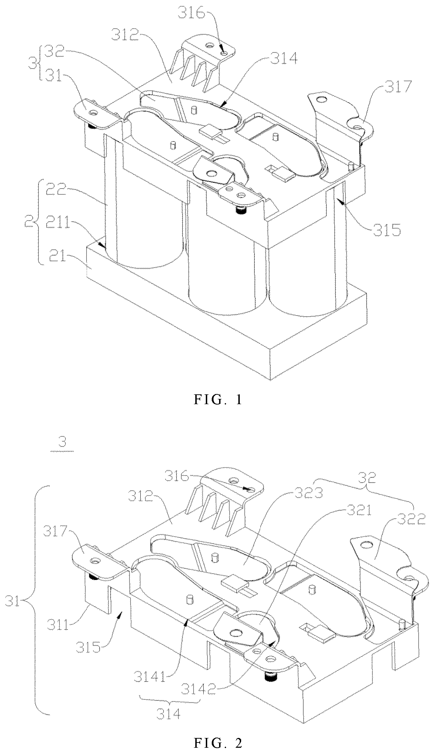

Based on the problems existing in the above fixed installation mode, please refer to FIG. 1 to FIG. 5, embodiments of the present disclosure provide an integrated busbar assembly 3 for fixing a plurality of single battery cells 22 in conjunction with a cell holder 21 provided with a plurality of bracket slots 211, and the integrated busbar assembly 3 includes:
an integrated bracket 31 including a first surface 311 and a second surface 312 arranged oppositely, wherein the first surface 311 is provided with a profiling groove group 313 arranged opposite to the bracket slots 211, the second surface 312 is provided with a placement groove group 314, the profiling groove group 313 is communicated with the placement groove group 314, and both ends of each of the plurality of single battery cells 22 are respectively fixed in the profiling groove group 313 and the bracket slot 211; and
a bus module 32 fixed in the placement groove group 314 and electrically connected to the plurality of single battery cells 22 so that the plurality of single battery cells 22 are electrically connected to each other.

The technical solution provided by the embodiments of the present disclosure mainly uses the integrated bracket 31 to cooperate with the cell holder 21 to limit and fix the plurality of single battery cells 22 between the integrated bracket 31 and the cell holder 21. Compared with the solution that the cylindrical profiling plates and the end plates are used to fix the plurality of single battery cells 22, the structure is simpler, the volume is smaller, and the fixing and installation is simpler and more convenient. Specifically, the plurality of bracket slots 211 are provided on the cell holder 21, and the profiling groove group 313 arranged opposite to the bracket slots 211 is opened on the first surface 311 of the integrated bracket 31, so that both ends of the single battery cell 22 are respectively located in the profiling groove group 313 and the bracket slot 211 to limit and fix the single battery cell 22. The entire process only requires placing the single battery cells 22 into the bracket slots 211 and then aligning the profiling groove group 313 of the integrated bracket 31 on the single battery cells 22. The installation process is simple and quick. The profiling groove group 313 on the integrated bracket 31 and the bracket slots 211 on the cell holder 21 are only need to be designed according to diameters of the battery cells. Compared with using cylindrical profiling plates and end plates, the structure is simpler, processing is easier, and the accuracy requirements for profiling are also lower, and there is no need to cover and fix an entire side of the single battery cell 22, so a volume of the integrated bracket 31 and the cell holder 21 is also smaller. In addition, by disposing the bus module 32 in the placement groove group 314, when the integrated bracket 31 fixes the single battery cells 22, the bus module 32 provided on the integrated bracket 31 is electrically connected to the single battery cells 22 simultaneously, and there is no need to connect wires separately, thereby realizing the electrical connection of the plurality of single battery cells 22.

It should be noted that for the above-mentioned integrated bracket 31, its main structure is a plate with a certain thickness. A depth of the profiling groove group 313 depends on the thickness of the integrated bracket 31. The deeper the depth, the better the fixing effect of the single battery cell 22. However, as the depth increases, the difficulty of fixing the battery cell also increases, and the heat dissipation effect of the battery cell is gradually weakened. Those skilled in the art can reasonably select the thickness of the integrated bracket 31 and the depth of the profiling groove group 313 according to actual situations. There is no limit here, as long as the profiling groove group 313 can limit a portion of an end of the single battery cell 22 facing away from the bracket slot 211 to a profiling groove 3131.

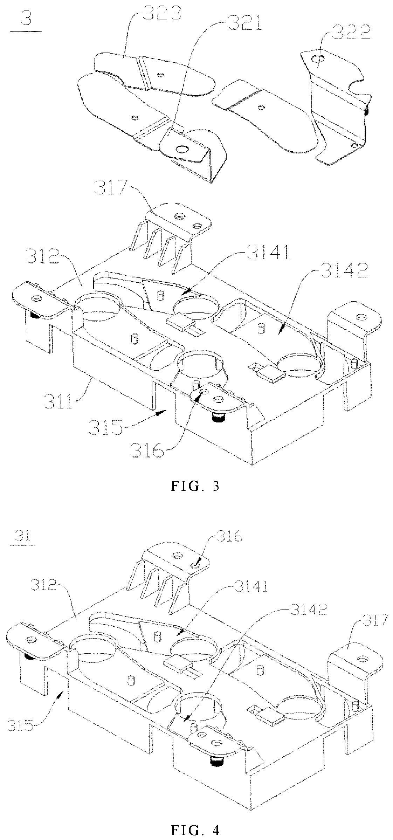

Referring to FIG. 3 and FIG. 4, in some embodiments, the profiling groove group 313 includes a plurality of profiling grooves 3131. The integrated bracket 31 is rectangular, and its first surface 311 has a length direction and a width direction perpendicular to the length direction. The plurality of profiling grooves 3131 are arranged in rows and columns, the length direction corresponds to a row direction of the plurality of profiling grooves 3131, the width direction corresponds to a column direction of the plurality of profiling grooves 3131, and the profiling grooves 3131 of two adjacent rows are arranged in an offset manner. Such an arrangement can open as many profiling grooves 3131 as possible within a limited area of the first surface 311, thereby improving space utilization and also facilitating mutual connection between the single battery cells 22 in the profiling grooves 3131. A shape of the profiling groove 3131 here is the same as a cross-sectional shape in an axial direction of the single battery cell 22, so that one end of the single battery cell 22 can be inserted into the profiling groove 3131.

Furthermore, a plurality of weight-reducing grooves are provided on the first surface 311 to reduce a weight of the integrated bracket 31.

In some embodiments, a plurality of heat dissipation notches 315 are formed on lateral sides of the integrated bracket 31, and the profiling grooves 3131 provided adjacent to the lateral sides of the integrated bracket 31 are communicated with the heat dissipation notches 315. The plurality of profiling grooves 3131 are communicated with each other, and the profiling grooves 3131 located at edges of the integrated bracket 31 are communicated with the heat dissipation notches 315, thereby realizing heat transfer of the single battery cells 22 in the plurality of profiling grooves 3131 and passing the heat through the heat dissipation notches 315 to the outside of the integrated bracket 31.

It should be noted that, for the cooperation between the profiling groove 3131 and the single battery cell 22, in the embodiments, an installation mode of interference fit is adopted. When one end of the single battery cell 22 is inserted into the profiling groove 3131, a certain extrusion pressure is required to insert the single battery cell 22 into the profiling groove 3131, which is beneficial to improving the stability and convenience of the single battery cell 22 in the profiling groove 3131. In addition, in addition to the interference fit, the fixation between the single battery cell 22 and the profiling groove 3131 also requires gluing or welding to further fix the single battery cell 22 in the profiling groove 3131. At this time, the interference fit may also play a positioning role.

In some embodiments, referring to FIG. 3 to FIG. 5, the placement groove group 314 includes a plurality of first placement grooves 3141 and a plurality of second placement grooves 3142. Each first placement groove 3141 is communicated with two profiling grooves 3131, and each second placement groove 3142 is communicated with one profiling groove 3131. That each first placement groove 3141 is communicated with the two profiling grooves 3131 is mainly to allow the single battery cells 22 in the two profiling grooves 3131 to be connected through the bus module 32. That each second placement groove 3142 is communicated with one profiling groove 3131 is mainly to allow the single battery cell 22 in the profiling groove 3131 to be connected to other components through the bus module 32. The first placement grooves 3141 and the second placement grooves 3142 are spaced apart, the plurality of first placement grooves 3141 are also spaced apart, and two second placement grooves 3142 are arranged oppositely along the width direction of the first surface 311 in the embodiments. Of course, in some other embodiments, the plurality of second placement grooves 3142 may also be arranged in other ways, which is not limited, and is specifically arranged according to wirings, a structure of the integrated bracket 31, and other external conditions.

In some embodiments, referring to FIG. 2 and FIG. 3, the bus module 32 includes a total positive bus 321, a total negative bus 322, and a plurality of series buses 323. The total positive bus 321 is disposed in one second placement groove 3142, and the total negative bus 322 is disposed in another second placement groove 3142. One end of the total positive bus 321 extends toward a side away from the second placement groove 3142 and is mainly configured for fixing with other components. Similarly, one end of the total negative bus 322 extends toward a side away from the second placement groove 3142 and is also configured for fixing with other components. The plurality of series buses 323 are disposed in the plurality of first placement grooves 3141 to realize series connection of the plurality of single battery cells 22.

It should be noted that the series buses 323 are configured to connect the plurality of single battery cells 22 included in one battery module in series. That is, the positive and negative electrodes of the plurality of single battery cells 22 are connected together in a designed series manner. Specifically, the series buses 323 may be connected (such as welding) to positive poles (that is, the positive pole at a center of a top cover of the single battery cell 22) of the plurality of single battery cells 22 or negative covers (that is, any area at the top of a housing of the single battery cell 22 other than a position of the positive pole and separated from the position of the positive pole). The positive pole of any single battery cell 22 in the battery module can be connected to the negative cover of other single battery cells 22 through the series buses 323 to achieve series connection, that is, the positive and negative poles of the single battery cells 22 are connected in sequence. When there are multiple single battery cells 22, specific connection methods in series and the order in which the single battery cells 22 are connected are various and are well-known technologies in the art, and will not be described again here.

In addition, the total negative bus 322 and the total positive bus 321 are respectively configured to connect a negative output end and a positive output end of the plurality of single battery cells 22 connected in series by the series buses 323.

It should be noted that after one battery module is installed with the integrated busbar assembly 3 of the present disclosure, it can be connected in series and parallel with other battery modules 2 through two external busbars connected to the integrated busbar assembly 3, forming a battery system. Of course, it can also be connected to positive and negative poles of a load to supply power to the load.

It should be noted that the load refers to the equipment that receives electrical energy in a circuit and is a general term for all types of electrical appliances. For example, common loads include air conditioners, electric motors on electric vehicles and other electrical equipment that consume power.

As for the connection between the total positive bus 321, the total negative bus 322, and the multiple series buses 323 and the first placement grooves 3141 or the second placement grooves 3142, in the embodiments, a hot melt fixing method is used. Specifically, the total positive bus 321, the total negative bus 322, and the plurality of series buses 323 are all provided with heat melt holes, and heat melt posts are provided on the first placement grooves 3141 and the second placement grooves 3142. The heat melt holes of the total positive bus 321, the total negative bus 322, and the plurality of series buses 323 are respectively matched with the heat melt posts, so that the total positive bus 321, the total negative bus 322, and the plurality of series buses 323 are limited in corresponding first placement grooves 3141 and second placement grooves 3142, and are then completely fixed in the corresponding first placement grooves 3141 and second placement grooves 3142 through welding. Inner walls of the first placement grooves 3141 and the second placement grooves 3142 and the heat melt posts can play a positioning role and anti-fooling effect during the fixed installation process of the bus module 32 to avoid the total positive busbar 321, the total negative busbar 322, and the plurality of series buses 323 are misplaced.

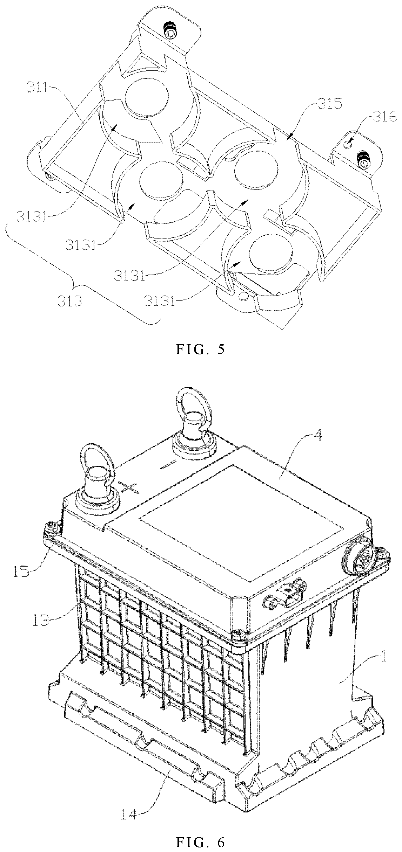

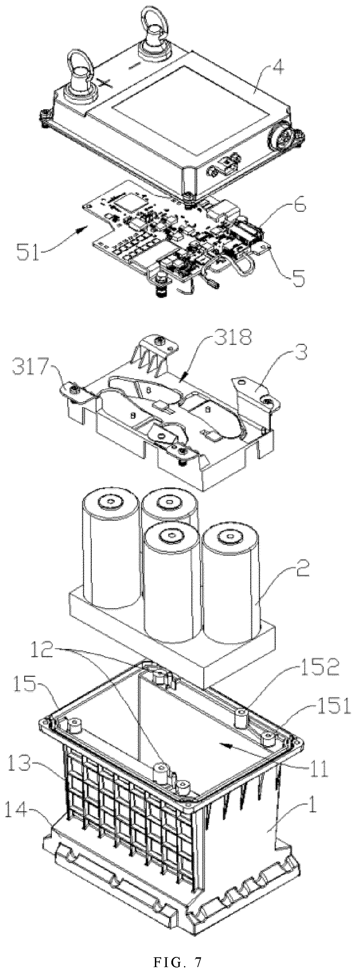

Referring to FIG. 6 and FIG. 7, the present disclosure also provides a battery module, which is mainly used to integrate the battery cells, transfer the battery energy to the outside, provide electrical connection ports for external devices, protect the battery cells, and increase an energy density of the battery cells. The battery module includes:
a box body 1 provided with an accommodation cavity 11;
a battery cell module 2 disposed in the accommodation cavity 11;
the integrated busbar assembly 3 as described in any of the above embodiments, provided on a top of the box body 1, and electrically connected to the battery cell module 2;
a box cover 4 covering the top of the box body 1; and
a battery management module 5 disposed on a side of the box cover 4 facing the box body 1 and electrically connected to the integrated busbar assembly 3 through connecting harnesses 6.

With this arrangement, the battery module provided by the embodiments may effectively improve the technical problems of the complex fixed installation structures and difficult assembly of the plurality of cylindrical battery cells in a cylindrical battery pack. A derivation process of this beneficial effect is generally similar to a derivation process of the beneficial effects brought by the integrated busbar assembly 3 and will not be repeated again here.

It should be noted that the battery cell module 2 includes the battery cell holder 21 and the plurality of single battery cells 22. The cell holder 21 is provided with the plurality of bracket slots 211, and ends of the plurality of single battery cells 22 facing away from the integrated bracket 31 are respectively inserted into the bracket slots 211 in correspondence. The correspondence here means that one single battery cell 22 is inserted into one bracket slot 211. The cooperation between the single battery cell 22 and the bracket slot 211 adopts an interference fit, which is the same as the cooperation and fixation mode between the single battery cell 22 and the profiling groove 3131, using welding or gluing, and the beneficial effects will not be repeated here. Each bracket slot 211 corresponds to one profiling groove 3131, and each bracket slot 211 and the corresponding profiling groove 3131 are coaxially arranged to ensure that the single battery cell 22 will not tilt when fixedly installed. The cell holder 21 and the box body 1 may be fixed by welding or gluing, without limitation. The box cover 4 and the box body 1 are fixed with bolts, and a sealing ring may be provided between the box body 1 and the box cover 4 to improve the sealing performance of the connection between the box body 1 and the box cover 4. The battery management module 5 mainly includes: a monitoring unit, configured for real-time monitoring of key parameters of the battery cells, such as voltage, current, temperature, etc.; a control unit, configured to manage charging and discharging processes of the battery cells and perform safety functions such as power-off protection and temperature control; an equalizer, configured to implement balanced charging to ensure similar charge states between battery cells; a communication interface, configured for communicating with other systems, such as vehicle management systems, energy management systems, or monitoring centers, wherein the communication interface is wired or wireless to transmit data in real time; fuses and a circuit breaker, configured to provide additional battery protection against conditions such as overcurrent or short circuits; and a battery connector and wires, configured to interface with the battery cells to monitor and manage the performance of the battery cells. The battery management module 5 refers to existing technologies and will not be described again here.

In some embodiments, the battery cell module 2 includes the plurality of single battery cells 22 and the cell holder 21. The ends of the plurality of single battery cells 22 facing away from the integrated busbar assembly 3 are respectively fixed in the plurality of bracket slots 211. A side of the cell holder 21 facing away from the single battery cells 22 is fixed to a bottom of the accommodating cavity 11. In the embodiments, the fixation between the single battery cell 22 and the bracket slot 211 is performed by gluing and curing. Specifically, glue can be applied to the inner wall of the bracket slot 211, then the single battery cell 22 is inserted into the bracket slot 211, and then the glue is solidified. The cell holder 21 and the bottom of the accommodation cavity 11 are also fixed by gluing and curing.

In some embodiments, the top of the box body 1 is provided with positioning posts 12, and the integrated bracket 31 is provided with positioning holes 316. The positioning posts 12 cooperate with the positioning holes 316 to realize the positioning and pre-fixing of the integrated bracket 31. The cooperation between the positioning posts 12 and the positioning holes 316 here means that when the integrated bracket 31 is installed on the box body 1, the positioning hole 316 of the integrated bracket 31 is aligned with the positioning post 12, and then the positioning post 12 passes through the positioning hole 316 to complete the positioning and pre-fixing.

In some embodiments, there are two positioning posts 12 and two positioning holes 316. The two positioning posts 12 are arranged oppositely along a diagonal line of the box body 1. Similarly, the positioning holes 316 are arranged oppositely along a diagonal line of the integrated bracket 31. Therefore, only the two positioning posts 12 are required to coordinate with the positioning holes 316 to achieve the pre-fixing of the integrated bracket 31 in a horizontal direction, minimizing the structure and matching relationship required for positioning.

Furthermore, in some embodiments, there may be three positioning posts 12, and correspondingly, there may be three positioning holes 316. The three positioning posts 12 are respectively provided at three corners of the box body 1 or near the corners. Similarly, the three positioning holes 316 are respectively provided at three corners of the integrated bracket 31 or near the corners. Each positioning hole 316 is provided corresponding to one positioning post 12. When the integrated bracket 31 and the box body 1 are fixedly installed, the cooperation between the positioning post 12 and the positioning hole 316 can not only play the role of positioning and pre-fixing, but also play a foolproof role to prevent fixed position errors between the integrated bracket 31 and the box body 1.

In addition to the above solution in which the positioning posts 12 are provided on the box body 1 and the positioning holes 316 are opened on the integrated bracket 31, in some embodiments, the positioning posts 12 may also be provided on the integrated bracket 31 and the positioning holes 316 may be opened on the box body 1. Each positioning post 12 corresponds to one positioning hole 316, so that the positioning post 12 can be inserted into the positioning hole 316, thereby realizing the positioning connection between the box body 1 and the integrated bracket 31.

In some embodiments, there are a plurality of connecting harnesses 6. One end of each connecting harness 6 is electrically connected to the battery management module 5, and the other end is electrically connected to the bus module 32. The plurality of connecting harnesses 6 are electrically connected to the total positive bus 321, the total negative bus 322, and the plurality of series buses 323 of the bus module 32, respectively. The connection is achieved by welding, that is, the connecting harnesses 6 are welded to the bus module 32, eliminating the need to connect to a bus harness and eliminating that ends of the plurality of branch harnesses away from the bus harness are electrically connected to the bus module 32. A wire harness wrapping tube may also be provided on a path connecting the plurality of connecting harnesses 6 to the battery management module 5, and the plurality of connecting harnesses 6 pass through the wire harness wrapping tube, thereby avoiding a messy distribution of the plurality of connecting harnesses 6.

It should be noted that as for the connecting harness 6, a cross-sectional area of the connecting harness 6 in the embodiments is 0.22 mm². Thicknesses of the series bus 323, the total positive bus 321, and the total negative bus 322 are all 0.5 mm.

In some embodiments, a sealing ring is provided between the box cover 4 and the box body 1 to improve waterproof and insulation performance of the battery module. The box cover 4 is provided with an output positive electrode, an output negative electrode, a communication interface, and a ventilation valve. Both the output positive electrode and the output negative electrode are connected to the battery management module 5. The output positive electrode and the output negative electrode are both provided with waterproof covers for wrapping the output positive electrode and the output negative electrode to provide waterproofing, insulation and protection. The communication interface is mainly used to connect external devices or systems to connect the external devices or systems to the battery module to realize information transmission. The ventilation valve is mainly used for heat dissipation.

Referring to FIG. 6 and FIG. 7, in some embodiments, the box body 1 includes an accommodation part 13 with the accommodation cavity 11, a base 14, and an installation part 15. Along an axial direction of the single battery cell 22, the base 14 and the installation part 15 are respectively located on both sides of the accommodation part 13 and are integrally connected to the accommodation part 13. When projected along the axial direction of the single battery cell 22, a projected contour of the accommodation part 13 is located within a projected contour of the base 14 and a projected contour of the installation part 15. By making an area of the projected contour of the base 14 and an area of the projected contour of the installation part 15 greater than an area of the projected contour of the accommodation part 13, an area where the box body 1 is placed can be increased, thereby improving the stability of the box body 1 and improving an overall strength of the box body 1.

Furthermore, please refer to FIG. 7, the integrated bracket 31 includes a plurality of hangers 317. The plurality of hangers 317 are disposed on the first surface 311 and arranged circumferentially along an edge of the first surface 311. A number of the hangers 317 and specific positions along the edge may be selected according to actual conditions. In the embodiments, because the installation part 15 is rectangular, the number of the hangers 317 is four, and the hangers 317 are respectively located at four corners of the rectangle. A plurality of first installation posts 151 are provided on the installation part 15. A side of the hanger 317 facing away from the first surface 311 extends toward the first installation post 151 and is connected to the first installation post 151. The first installation post 151 is provided with a threaded hole, and the hanger 317 is provided with a connecting hole. The integrated bracket 31 is connected to the box body 1 by a bolt passing through the connecting hole and being threadedly connected to the threaded hole. That the hanger 317 is provided on the first surface 311 is mainly to make a connection position between the hanger 317 and the installation part 15 higher than the first surface 311. That the side of the hanger 317 facing away from the first surface 311 extends toward the first installation post 151 is mainly to adapt to a flared structure of the installation part 15, and the flared structure extends toward a side of the installation part 15 away from the accommodation part 13.

Furthermore, the installation part 15 is also provided with second installation posts 152. The battery management module 5 is fixed on the second installation posts 152. A height of the second installation post 152 is greater than a height of the first installation post 151, so that the battery management module 5 and the integrated bracket 31 are separated. When the second installation part 15 and the first installation part 15 are both installed on the same plane of the installation part 15, the heights here refer to a distance between a side of the second installation post 152 and a side of the first installation post 152 those facing away from the installation part 15 and the same plane along a direction from the integrated bracket 31 toward the battery management module 5. By limiting the height of the second installation post 152 to be greater than the height of the first installation post 151, and limiting the connection position between the hanger 317 and the box body 1 to be higher than the first surface 311, there is a certain space between the battery management module 5 and the integrated bracket 31 to form electrical protection for the battery management module 5, preventing the battery management module 5 from being damaged due to direct contact with the integrated bracket 31.

In some embodiments, the integrated bracket 31 includes a plurality of hangers 317. The hangers 317 are connected to the box body 1 or the box cover 4. In the embodiments, the hangers 317 are connected to the box body 1 by bolt connection. The plurality of hangers 317 enclose an installation position 318. Specifically, four hangers 317 are respectively located at the four corners of the box body 1, thereby enclosing a rectangular installation position 318. The battery management module 5 is located in the installation position 318 and is located on a side of the bus module 32 away from the integrated bracket 31, which is beneficial to effective use of space resources and reduces a volume of the battery module as much as possible. In addition, the battery management module 5 is provided with a plurality of avoidance positions 51. When projected along a direction from the integrated bracket 31 toward the battery management module 5, a projection of each hanger 317 is located in one avoidance position 51, which effectively prevents the battery management module 5 from contacting the hanger 317 during the installation process to cause an electrical problem, and makes internal structures of the battery module more compact.

The battery module in the embodiments can be used as power batteries for new energy vehicles, new energy operating machinery, etc.

The embodiments of the present disclosure are introduced in detail above. Specific examples are used in this paper to illustrate the principles and implementation methods of the present disclosure. The description of the above embodiments is only used to help understand the method of the present disclosure and its core ideas. At the same time, for those skilled in the art, there will be changes in the specific implementation mode and application scope based on the ideas of the present disclosure. In summary, the content of this description should not be understood as a limitation of the present disclosure.

## Claims

1. An integrated busbar assembly (3), applied for fixing a plurality of single battery cells (22) in conjunction with a cell holder (21) provided with a plurality of bracket slots (211), and **characterized in that** the integrated busbar assembly (3) comprises:
an integrated bracket (31) comprising a first surface (311) and a second surface (312) arranged oppositely, wherein the first surface (311) is opened with a profiling groove group (313) arranged opposite to the bracket slots (211), the second surface (312) is opened with a placement groove group (314), the profiling groove group (313) is communicated with the placement groove group (314), and opposite ends of the plurality of the single battery cells (22) are fixed in the profiling groove group (313) and the bracket slots (211); and
a bus module (32) fixed in the placement groove group (314) and electrically connected to the plurality of single battery cells (22) so that the plurality of single battery cells (22) are electrically connected to each other.

2. The integrated busbar assembly (3) according to claim 1, **characterized in that** the profiling groove group (313) comprises a plurality of profiling grooves (3131), the first surface (311) has a length direction and a width direction perpendicular to the length direction, the plurality of profiling grooves (3131) are arranged in rows and columns, the length direction corresponds to a row direction of the plurality of profiling grooves (3131), the width direction corresponds to a column direction of the plurality of profiling grooves (3131), and the profiling grooves (3131) of two adjacent rows are arranged in an offset manner.

3. The integrated busbar assembly (3) according to claim 1, **characterized in that** the profiling groove group (313) comprises a plurality of profiling grooves (3131), a plurality of heat dissipation notches (315) are provided on lateral sides of the integrated bracket (31), and the profiling grooves (3131) disposed adjacent to the lateral sides of the integrated bracket (31) are communicated with the heat dissipation notches (315).

4. The integrated busbar assembly (3) according to claim 1, **characterized in that** the profiling groove group (313) comprises a plurality of profiling grooves (3131), and an interference fit is applied between the profiling groove (3131) and the single battery cell (22).

5. The integrated busbar assembly (3) according to any one of claim 1 to claim 4, **characterized in that** the profiling groove group (313) comprises a plurality of profiling grooves (3131), the placement groove group (314) comprises a plurality of first placement grooves (3141) and a plurality of second placement grooves (3142), each of the first placement grooves (3141) is communicated with two of the profiling grooves (3131), and each of the second placement grooves (3142) is communicated with one of the profiling grooves (3131).

6. The integrated busbar assembly (3) according to claim 5, **characterized in that** the bus module (32) comprises a total positive bus (321), a total negative bus (322), and a plurality of series buses (323), the total positive bus (321) is disposed in one of the second placement grooves (3142), the total negative bus (322) is disposed in another one of the second placement grooves (3142), and the plurality of series buses (323) are disposed in the plurality of first placement grooves (3141).

7. A battery module, **characterized by** comprising:
a box body (1) opened with an accommodation cavity (11);
a battery cell module (2) disposed in the accommodation cavity (11);
the integrated busbar assembly (3) according to any one of claim 1 to claim 6, disposed on a top of the box body (1), and electrically connected to the battery cell module (2);
a box cover (4) covering the top of the box body (1); and
a battery management module (5) disposed on a side of the box cover (4) facing the box body (1) and electrically connected to the integrated busbar assembly (3) through connecting harnesses (6).

8. The battery module according to claim 7, **characterized in that** the battery cell module (2) comprises the plurality of single battery cells (22) and the cell holder (21), ends of the plurality of single battery cells (22) facing away from the integrated busbar assembly (3) are respectively fixed in the plurality of bracket slots (211), and a side of the cell holder (21) facing away from the single battery cells (22) is fixed to a bottom of the accommodation cavity (11).

9. The battery module according to claim 7, **characterized in that** one of the box body (1) and the integrated bracket (31) is provide with positioning posts (12), the other one of the box body (1) and the integrated bracket (31) is opened with positioning holes (316), and the positioning posts (12) cooperate with the positioning holes (316) to realize positioning between the integrated bracket (31) and the box body (1).

10. The battery module according to claim 9, **characterized in that** there are three positioning posts (12), the three positioning posts (12) are respectively provided at three corners of the top of the box body (1), there are three positioning holes (316) provided on the integrated bracket (31), and the three positioning holes (316) and the three positioning posts (12) are matched to positioning.

11. The battery module according to claim 7, **characterized in that** there are a plurality of the connecting harnesses (6), one end of the plurality of connecting harnesses (6) is electrically connected to the battery management module (5), and the other end of the plurality of connecting harnesses (6) is electrically connected to the bus module (32).

12. The battery module according to claim 7, **characterized in that** the box body (1) comprises an accommodation part (13) opened with the accommodation cavity (11), a base (14), and an installation part (15); along an axial direction of the single battery cell (22), the base (14) and the installation part (15) are respectively connected to two sides of the accommodation part (13); and when projected along the axial direction of the single battery cell (22), a projected contour of the accommodation part (13) is located within a projected contour of the base (14) and a projected contour of the installation part (15).

13. The battery module according to claim 12, **characterized in that** the integrated bracket (31) comprises a plurality of hangers (317), and the plurality of hangers (317) are disposed on the first surface (311) and arranged circumferentially along an edge of the first surface (311); the installation part (15) is provided with a plurality of first installation posts (151); and a side of the hanger (317) facing away from the first surface (311) extends toward the first installation post (151) and is connected to the first installation post (151).

14. The battery module according to claim 13, **characterized in that** the installation part (15) is also provided with second installation posts (152), the battery management module (5) is fixed on the second installation posts (152), and a height of the second installation post (152) is greater than a height of the first installation post (151), so that the battery management module (5) and the integrated bracket (31) are separated.

15. The battery module according to claim 7, **characterized in that** the integrated bracket (31) comprises a plurality of hangers (317), and the hangers (317) are connected to the box body (1) or the box cover (4); the plurality of hangers (317) enclose an installation position (318), and the battery management module (5) is located in the installation position (318) and is located on a side of the bus module (32) facing away from the integrated bracket (31); and the battery management module (5) is provided with a plurality of avoidance positions (51), and when projected along a direction from the integrated bracket (31) toward the battery management module (5), a projection of each of the hangers (317) is located in one of the avoidance positions (51).
